# EUROPÄISCHE PATENTANMELDUNG

(11) **EP 4 145 015 A1**
(43) Veröffentlichungstag der Anmeldung: **08.03.2023**
(21) Anmeldenummer: 22193178.5
(22) Anmeldetag: 31.08.2022
(51) Int. Cl.: F16H 3/089, B60K 1/00, B60K 17/346

(54) **VERTEILERGETRIEBE FÜR EINEN KRAFTFAHRZEUGANTRIEBSSTRANG**

(30) Priorität: 01.09.2021 DE 102021209594
(71) Anmelder: ZF Friedrichshafen AG, 88046 Friedrichshafen (DE)
(72) Erfinder: Pfeffer, Andreas, 94234 Viechtach (DE); Mühlbauer, Alexander, 94575 Windorf (DE); Reitinger, Franz, 4092 Esternberg (AT); Brilka, Tobias, 94547 Iggensbach (DE)

(57) **Zusammenfassung**

Die Erfindung betrifft ein Verteilergetriebe (8) für einen Kraftfahrzeugantriebsstrang (2), umfassend eine Verteilereinrichtung (18) und eine Übersetzungseinrichtung (17), welche ein erstes Schaltelement (27) und ein zweites Schaltelement (28) aufweist. Über die Übersetzungseinrichtung kann ein Kraftfluss von einem Getriebeeingang (13) des Verteilergetriebes (8) durch Betätigung des ersten Schaltelements (27) mit einem ersten Übersetzungsverhältnis sowie mittels Betätigung des zweiten Schaltelements (28) mit einem zweiten Übersetzungsverhältnis jeweils der Verteilereinrichtung (18) eingangsseitig zugeführt werden. Dabei steht die Verteilereinrichtung (18) abtriebsseitig mit mehreren Getriebeausgängen (10, 11) in Verbindung, die im Kraftfahrzeugantriebsstrang (2) jeweils für die Verbindung mit je einer Antriebsachse (3, 4) vorgesehen sind. Um bei diesem Verteilergetriebe (8) einen hohen Schaltkomfort zu realisieren, sind das erste Schaltelement (27) und das zweite Schaltelement (28) als lastschaltbare Schaltelemente ausgeführt.

## Beschreibung

Die Erfindung betrifft ein Verteilergetriebe für einen Kraftfahrzeugantriebsstrang, umfassend eine Verteilereinrichtung und eine Übersetzungseinrichtung, welche ein erstes Schaltelement und ein zweites Schaltelement aufweist, wobei über die Übersetzungseinrichtung ein Kraftfluss von einem Getriebeeingang des Verteilergetriebes durch Betätigung des ersten Schaltelements mit einem ersten Übersetzungsverhältnis sowie mittels Betätigung des zweiten Schaltelements mit einem zweiten Übersetzungsverhältnis jeweils der Verteilereinrichtung eingangsseitig zuführbar ist, und wobei die Verteilereinrichtung abtriebsseitig mit mehreren Getriebeausgängen in Verbindung steht, die im Kraftfahrzeugantriebsstrang jeweils für die Verbindung mit je einer Antriebsachse vorgesehen sind. Des Weiteren betrifft die Erfindung einen Kraftfahrzeugantriebsstrang mit einem vorgenannten Verteilergetriebe sowie ein Kraftfahrzeug.

Im Bereich der Kraftfahrzeuge sind Verteilergetriebe bekannt, über welche eine antriebseitig eingeleitete Antriebsleistung auf mehrere Antriebsachsen des jeweiligen Kraftfahrzeuges im Sinne einer Längsverteilung verteilt werden kann. Insbesondere bei geländegängigen Nutzfahrzeugen ist ein jeweiliges Verteilergetriebe häufig auch mit einer Übersetzungseinrichtung versehen, über welche zumeist zwei unterschiedliche Übersetzungsverhältnisse dargestellt werden können, von denen es sich bei dem einen Übersetzungsverhältnis zumeist um einen Straßengang und bei dem anderen Übersetzungsverhältnis um einen Geländegang handelt.

Aus der DE 10 2013 212 610 A1 geht ein Verteilergetriebe hervor, welches neben einer ein Differentialgetriebe aufweisenden Verteilereinrichtung auch mit einer Übersetzungseinrichtung ausgestattet ist. Die Übersetzungseinrichtung verfügt dabei über eine Planetenstufe, deren Sonnenrad permanent festgesetzt ist, während ein Planetensteg der Planetenstufe ständig drehfest mit einer Eingangsseite der nachfolgenden Verteilereinrichtung in Form eines Differentialkorbes des Differentialgetriebes verbunden ist. Zudem sind der Übersetzungseinrichtung zwei Schaltelemente zugeordnet, die zu einer Schalteinrichtung zusammengefasst sind und von denen das eine Schaltelement bei Betätigung einen Getriebeeingang des Verteilergetriebes drehfest mit einem Hohlrad der Planetenstufe verbindet, wohingegen das andere Schaltelement im geschlossenen Zustand eine drehfeste Verbindung zwischen dem Getriebeeingang und dem Planetensteg herbeiführt. Hierdurch können zwei unterschiedliche Übersetzungsverhältnisse der Übersetzungseinrichtung realisiert werden. Beide Schaltelemente sind dabei jeweils als formschlüssige Schaltelemente ausgebildet, indem eine jeweilige drehfeste Verbindung jeweils über Zahneingriffe hergestellt wird. Das Differentialgetriebe der Verteilereinrichtung steht mit Getriebeausgängen des Verteilergetriebes in Verbindung, die einer Verbindung mit je einer Antriebsachse eines Kraftfahrzeuges dienen.

Ausgehend vom vorstehend beschriebenen Stand der Technik ist es nun die Aufgabe der vorliegenden Erfindung, ein Verteilergetriebe für einen Kraftfahrzeugantriebsstrang zu schaffen, wobei bei diesem Verteilergetriebe unterschiedliche Übersetzungsverhältnisse mit hohem Schaltkomfort schaltbar sein sollen.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Ein Kraftfahrzeugantriebsstrang mit einem erfindungsgemäßen Verteilergetriebe ist zudem Gegenstand der Ansprüche 9 bis 11. Ferner betrifft Anspruch 12 ein Kraftfahrzeug mit einem vorgenannten Kraftfahrzeugantriebsstrang.

Gemäß der Erfindung umfasst ein Verteilergetriebe eine Verteilereinrichtung und eine Übersetzungseinrichtung, welche ein erstes Schaltelement und ein zweites Schaltelement aufweist. Dabei kann über die Übersetzungseinrichtung ein Kraftfluss von einem Getriebeeingang des Verteilergetriebes durch Betätigung des ersten Schaltelements mit einem ersten Übersetzungsverhältnis sowie mittels Betätigung des zweiten Schaltelements mit einem zweiten Übersetzungsverhältnis jeweils der Verteilereinrichtung eingangsseitig zugeführt werden. Die Verteilereinrichtung steht abtriebsseitig mit mehreren Getriebeausgängen in Verbindung, die im Kraftfahrzeugantriebsstrang jeweils für die Verbindung mit je einer Antriebsachse vorgesehen sind.

Bei dem erfindungsgemäßen Verteilergetriebe ist die Übersetzungseinrichtung dafür vorgesehen, zwischen dem Getriebeeingang des Verteilergetriebes und der nachgeschalteten Verteilereinrichtung unterschiedliche Übersetzungsverhältnisse schalten zu können. Zu diesem Zweck ist die Übersetzungseinrichtung mit einem ersten Schaltelement und einem zweiten Schaltelement ausgestattet, durch deren jeweilige Betätigung je ein Übersetzungsverhältnis darstellbar ist. Im Rahmen der Erfindung kann die Übersetzungseinrichtung neben dem ersten Schaltelement und dem zweiten Schaltelement aber auch ein oder mehrere weitere Schaltelemente aufweisen, die jeweils der Darstellung je eines weiteren Übersetzungsverhältnisses dienen. Besonders bevorzugt ist die Übersetzungseinrichtung aber mit genau zwei Schaltelementen ausgestattet. Von den beiden Übersetzungsverhältnissen, die im Einzelnen über das erste Schaltelement oder das zweite Schaltelement geschaltet werden können, handelt es sich bei dem einen Übersetzungsverhältnis insbesondere um ein für Straßenfahrt geeignetes Übersetzungsverhältnis (Straßengang), während das jeweils andere Übersetzungsverhältnis (Geländegang) bevorzugt für Geländefahrt geeignet ist.

Neben dem Getriebeeingang ist das erfindungsgemäße Verteilergetriebe auch mit mehreren Getriebeausgängen ausgestattet, die in einem verbauten Zustand des Verteilergetriebes in einem Kraftfahrzeugantriebsstrang jeweils in Verbindung mit je einer Antriebsachse im Antriebsstrang dienen. Insofern ist das Verteilergetriebe dafür konzipiert, eine Verteilung auf mehrere Antriebsachsen vorzunehmen oder vornehmen zu können. Dabei sind bei dem Verteilergetriebe die Getriebeausgänge jeweils mit der Verteilereinrichtung verbunden, wobei dies bevorzugt dadurch verwirklicht ist, dass der einzelne Getriebeausgang an einem jeweiligen Wellenende je einer Abtriebswelle der Verteilereinrichtung ausgebildet ist. Dabei liegt der jeweilige Getriebeausgang insbesondere als Flanschabschnitt vor, an welchem im Zuge der Montage des erfindungsgemäßen Verteilergetriebes die Verbindung zu der jeweiligen Antriebsachse hergestellt werden kann.

Die Verteilereinrichtung ist dafür vorgesehen, eine an dem Getriebeeingang eingeleitete und über die Übersetzungseinrichtung übersetzte Antriebsbewegung in Richtung der Getriebeausgänge weiterzuführen. Dabei kann die Verteilereinrichtung im Sinne der Erfindung so ausgestaltet sein, dass die Getriebeausgänge alle permanent mit einer Eingangsseite der Verteilereinrichtung gekoppelt sind, wodurch über die Verteilereinrichtung eine permanente Aufteilung einer eingangsseitig eingeleiteten Antriebsleistung vorgenommen wird. Im Rahmen der Erfindung kann aber auch nur einer der Getriebeausgänge permanent mit der Eingangsseite der Verteilereinrichtung in Verbindung stehen, wodurch auch nur zu diesem Getriebeausgang hin eine permanente Führung einer Antriebsbewegung möglich ist, während ein oder mehrere weitere Getriebeausgänge zuerst mit der Eingangsseite der Verteilereinrichtung zu koppeln sind, um eine Aufteilung der Antriebsleistung auf die Getriebeausgänge zu realisieren.

Im Sinne der Erfindung sind die Übersetzungseinrichtung und die Verteilereinrichtung bevorzugt gemeinsam in einem Gehäuse des Verteilergetriebes aufgenommen, so dass die Übersetzungseinrichtungen und die Verteilereinrichtung eine Baueinheit bilden.

Die Erfindung umfasst nun die technische Lehre, dass das erste Schaltelement und das zweite Schaltelement als lastschaltbare Schaltelemente ausgeführt sind. Mit anderen Worten sind also das erste Schaltelement und das zweite Schaltelement so ausgeführt, dass sie jeweils unter Last in einen jeweils betätigten Zustand überführt werden können.

Eine derartige Ausgestaltung eines Verteilergetriebes hat dabei den Vorteil, dass somit Schaltungen zwischen den beiden Übersetzungsverhältnissen, die über das erste und das zweite Schaltelement jeweils schaltbar sind, unter Last vollzogen werden können. Hierdurch kann bei Anwendung des Verteilergetriebes in einem Kraftfahrzeugantriebsstrang ein Betrieb des zugehörigen Kraftfahrzeuges mit hohem Komfort stattfinden, da im Bedarfsfall mit kurzer Schaltzeit und unter Last zwischen den beiden Übersetzungsverhältnissen umgeschaltet werden kann. Insgesamt lässt sich dadurch ein Verteilergetriebe realisieren, bei welchem unterschiedliche Übersetzungsverhältnisse schaltbar sind und damit auch unterschiedliche Betriebszustände eines zugehörigen Kraftfahrzeuges dargestellt werden können, wobei zudem ein Wechsel zwischen den unterschiedlichen Übersetzungsverhältnissen unter Last und damit mit hohem Komfort möglich ist.

Sind bei dem erfindungsgemäßen Verteilergetriebe neben dem ersten Schaltelement und dem zweiten Schaltelement noch ein oder mehrere, weitere Schaltelemente der Übersetzungseinrichtung vorgesehen, so können auch diese weiteren Schaltelemente im Sinne der Erfindung als lastschaltbare Schaltelemente vorliegen. Alternativ dazu kann ein weiteres Schaltelement aber auch als nicht lastschaltbares Schaltelement ausgeführt sein, so dass ein Schalten eines zugehörigen Übersetzungsverhältnisses nur unter Unterbrechung der Zugkraft möglich ist.

Entsprechend einer Ausführungsform der Erfindung ist das erste Schaltelement und/oder das zweite Schaltelement als kraftschlüssiges Schaltelement ausgebildet, wobei das jeweilige Schaltelement hierbei bevorzugt als Lamellenschaltelement vorliegt. Hierdurch kann eine Lastschaltbarkeit des jeweiligen Schaltelements zuverlässig realisiert werden. Besonders bevorzugt sind sowohl das erste Schaltelement, als auch das zweite Schaltelement als kraftschlüssige Schaltelemente ausgeführt und liegen beide als Lamellenschaltelemente vor. Alternativ zu einer Ausführung als Lamellenschaltelement kommt im Sinne der Erfindung aber auch eine anderweitige Ausführung eines kraftschlüssigen Schaltelements in Betracht, wie beispielsweise in Form einer Reibkupplung.

Gemäß einer Ausgestaltungsmöglichkeit der Erfindung weist die Übersetzungseinrichtung eine Eingangswelle auf, die drehfest mit dem Getriebeeingang verbunden ist. Die Eingangswelle der Übersetzungseinrichtungen kann dabei zum einen durch Betätigung des ersten Schaltelements wie zum anderen durch Schließen des zweiten Schaltelements jeweils mit einer Ausgangsseite der Übersetzungseinrichtung gekoppelt werden, die permanent mit einer Eingangsseite der Verteilereinrichtung in Verbindung steht. Bevorzugt ist der Getriebeeingang dabei an einem Wellenende der Eingangswelle der Übersetzungseinrichtung ausgestaltet, so dass der Getriebeeingang und die Eingangswelle der Übersetzungseinrichtung mit derselben Drehzahl rotieren. Zudem ist der Getriebeeingang dann bevorzugt als Flansch ausgeführt, an welchem das Verteilergetriebe und damit auch die Eingangswelle der Übersetzungseinrichtung insbesondere mit einer oder mehreren vorgeschalteten Antriebsmaschine, ggf. unter Zwischenschaltung einer oder mehrerer weiterer Getriebe, verbunden werden kann.

In Weiterbildung der vorgenannten Ausgestaltungsmöglichkeit weist die Übersetzungseinrichtung eine erste Stirnradstufe und eine zweite Stirnradstufe auf, die jeweils zwischen der Eingangswelle und einer achsparallel zu der Eingangswelle angeordneten Welle vorgesehen sind. Die Stirnradstufen setzen sich jeweils aus je einem Festrad und je einem Losrad zusammen, welches mit dem je einen Festrad der jeweiligen Stirnradstufe im Zahneingriff steht. Das erste Schaltelement setzt bei Betätigung das Losrad der ersten Stirnradstufe fest, während das zweite Schaltelement bei Betätigung für ein Festsetzen des Losrades der zweiten Stirnradstufe sorgt. Die Übersetzungsverhältnisse werden bei der Übersetzungseinrichtung des Verteilergetriebes also dadurch dargestellt, dass innerhalb der Übersetzungseinrichtung ein jeweiliger Kraftfluss über eine je zugehörige Stirnradstufe stattfindet. In vorteilhafter Weise kann das jeweilige Übersetzungsverhältnis dadurch mit niedrigem Aufwand verwirklicht werden. Die einzelne Stirnradstufe setzt sich dabei jeweils aus je einem Festrad und je einem Losrad zusammen, die permanent miteinander kämmen. Das jeweilige Losrad der einzelnen Stirnradstufe kann dabei dann über das zugehörige Schaltelement festgesetzt werden, um einen Kraftfluss über die jeweilige Stirnradstufe zu realisieren. Sind zudem weitere Schaltelemente vorgesehen, so ist bevorzugt auch eine entsprechende Anzahl an weiteren Stirnradstufen vorhanden.

Bei der vorgenannten Variante ist bei jeder Stirnradstufe das Festrad entweder auf der Eingangswelle oder der Welle angeordnet, während das zugehörige Losrad drehbar auf der Welle oder der Eingangswelle gelagert ist und dort durch Betätigen des zugehörigen Schaltelements festgesetzt werden kann. Die Ausgangsseite der Übersetzungseinrichtung kann dabei im Rahmen der Erfindung durch die achsparallel zu Eingangswelle sitzende Welle gebildet sein.

Besonders bevorzugt bildet aber ein Festrad der Stirnradstufen die Ausgangsseite der Übersetzungseinrichtung. Dazu ist bei einer der Stirnradstufen das Losrad drehbar auf der Eingangswelle gelagert und das zugehörige Festrad drehfest auf der Welle platziert, wobei das Festrad dieser Stirnradstufe die Ausgangsseite der Übersetzungseinrichtung bildet, indem das Festrad permanent mit der Eingangsseite der Verteilereinrichtung in Verbindung steht. Dadurch kann auf einfache Art und Weise eine permanente Koppelung zu der nachgeschalteten Verteilereinrichtung realisiert werden, da das die Koppelung zu der Verteilereinrichtung herstellende Festrad drehfest auf der Welle platziert ist und damit auch stets für eine Übertragung einer Drehbewegung zu der Verteilereinrichtung sorgt, wenn eine Kraftflussführung auf die Welle stattgefunden hat. Bei der anderen Stirnradstufe und auch bei ggf. vorgesehenen, weiteren Stirnradstufe kann dabei dieselbe Anordnung von Los- und Festrad verwirklicht sein. Alternativ dazu kann das jeweilige Losrad aber auch auf der achsparallelen Welle platziert sein, während das Festrad auf der Eingangswelle sitzt.

Im Rahmen der Erfindung kann die Übersetzungseinrichtung aber auch eine Planetenstufe aufweisen, über welche durch selektive Betätigung der Schaltelemente die unterschiedlichen Übersetzungsverhältnisse dargestellt werden können.

Gemäß einer weiteren Ausführungsform der Erfindung umfasst die Verteilereinrichtung ein Differentialgetriebe, welches insbesondere als Kegelraddifferential oder als Planetendifferential vorliegt. Dabei kann über das Differentialgetriebe ein Antriebsmoment auf Abtriebswellen aufgeteilt werden, die jeweils mit je einem der Getriebeausgänge in Verbindung stehen. Die Verwendung eines Differentialgetriebes hat den Vorteil, dass eine permanente Aufteilung eines Antriebsmoments auf die Getriebeausgänge und damit im verbauten Zustand des Verteilergetriebes auch auf die jeweiligen Antriebsachsen unter möglichem Ausgleich von Drehzahldifferenzen vorgenommen wird. Hierdurch ist das Verteilergetriebe auch für ein Kraftfahrzeug mit permanentem Allrad konzipiert. Dabei wird im Falle einer Ausführung als Kegelraddifferential eine gleichmäßige Momentenaufteilung realisiert, während bei Ausgestaltung des Differentialgetriebes als Planetendifferential auch eine ungleichmäßige Aufteilung möglich ist. Dem Differentialgetriebe kann im Rahmen der Erfindung zudem eine Sperreinrichtung zugeordnet sein, über welche bei Betätigung eine starre Verbindung zwischen den Abtriebswellen herbeigeführt wird und damit eine Ausgleichswirkung des Differentialgetriebes aufgehoben ist.

Alternativ zu der vorgenannten Ausführungsform ist eine Eingangsseite der Verteilereinrichtung permanent mit einem ersten Getriebeausgang gekoppelt, wohingegen ein zweiter Getriebeausgang über eine Kupplung mit dem ersten Getriebeausgang verbunden werden kann. Bei dieser Variante ist also nur der erste Getriebeausgang permanent mit der Eingangsseite und damit auch mit der vorgeschalteten Übersetzungseinrichtung gekoppelt, während der zweite Getriebeausgang in einem geöffneten Zustand der Kupplung von der Eingangsseite der Verteilereinrichtung und auch dem ersten Getriebeausgang entkoppelt ist. Wird dann allerdings die Kupplung in einen betätigten Zustand überführt, so sind die Getriebeausgänge starr miteinander verbunden und rotieren dementsprechend mit derselben Drehzahl. In diesem Fall wird dann ein an der Eingangsseite der Verteilereinrichtung eingeleitetes Antriebsmoment gleichmäßig und mit gleicher Drehzahl auf die beiden Getriebeausgänge aufgeteilt. Dadurch ist das erfindungsgemäße Verteilergetriebe für einen Kraftfahrzeugantriebsstrang eines Kraftfahrzeuges mit zuschaltbarem Allradantrieb ausgestaltet.

In Weiterbildung der Erfindung sind die Übersetzungseinrichtung und die Verteilereinrichtung axial überdeckend angeordnet. Hierdurch kann ein axial kompakter Aufbau des erfindungsgemäßen Verteilergetriebes erreicht werden, indem die Übersetzungseinrichtung und die Verteilereinrichtung in axialer Richtung im Wesentlichen auf derselben Höhe liegen.

Gegenstand der Erfindung ist zudem ein Kraftfahrzeugantriebsstrang, welcher dabei bevorzugt für ein Nutzfahrzeug vorgesehen ist. Dabei handelt es sich bei diesem Nutzfahrzeug insbesondere um einen geländegängigen Lkw. Dieser Kraftfahrzeugantriebsstrang ist dabei mit einem Verteilergetriebe ausgestattet, welches entsprechend einer oder mehrerer der vorgenannten Varianten ausgeführt ist.

Entsprechend einer Ausführungsform der Erfindung ist bei einem Kraftfahrzeugantriebsstrang das Verteilergetriebe an seinem Getriebeeingang mit mindestens einer vorgeschalteten Antriebsmaschine gekoppelt oder kann mit dieser gekoppelt werden. Dabei handelt es sich bei der mindestens einen Antriebsmaschine bevorzugt um eine Elektromaschine, wodurch der Kraftfahrzeugantriebsstrang für ein Elektrofahrzeug konzipiert ist. Die mindestens eine Elektromaschine kann dabei permanent mit dem Verteilergetriebe verbunden oder über ein zwischenliegendes Mehrganggetriebe verbindbar sein, bei welchem unterschiedliche Gänge schaltbar sind. Im erstgenannten Fall kann die mindestens eine Elektromaschine auch unmittelbar an dem Verteilergetriebe an dessen Getriebeeingang angeordnet sein. Die mindestens eine Elektromaschine ist dabei bevorzugt einerseits als Generator sowie andererseits als Elektromotor betreibbar.

Im Rahmen der Erfindung kann es sich bei der mindestens einen, vorgeschalteten Antriebsmaschine aber auch um eine Verbrennungskraftmaschine handeln, wobei dann zwischen der Verbrennungskraftmaschine und dem erfindungsgemäßen Verteilergetriebe insbesondere ein Anfahrelement und/oder ein Kraftfahrzeuggetriebe platziert sind.

In Weiterbildung der Erfindung ist mit einem Getriebeausgang des Verteilergetriebes mindestens eine antreibbare Vorderachse und mit einem anderen Getriebeausgang des Verteilergetriebes mindestens eine antreibbare Hinterachse trieblich verbunden. Besonders bevorzugt ist bei dem Antriebsstrang genau eine antreibbare Vorderachse und genau eine antreibbare Hinterachse vorgesehen, wobei die Vorderachse und die Hinterachse jeweils mit dem zugehörigen Getriebeausgang des Verteilergetriebes in Verbindung stehen. Besonders bevorzugt ist eine betriebliche Verbindung zwischen einem Getriebeausgang des Verteilergetriebes und einer Antriebsachse über eine zwischenliegende Gelenkwelle hergestellt.

Die Erfindung betrifft zudem ein Kraftfahrzeug, bei welchem es sich bevorzugt um ein Nutzfahrzeug und hierbei insbesondere um ein geländegängiges Nutzfahrzeug handelt. Dabei ist dieses Kraftfahrzeug mit einem Antriebsstrang entsprechend einer oder mehrerer der vorgenannten Ausgestaltungsmöglichkeiten ausgestattet. Besonders bevorzugt verfügt dieses Kraftfahrzeug dabei als Antriebsmaschine über mindestens eine Elektromaschine, so dass das Kraftfahrzeug als Elektrofahrzeug ausgeführt ist.

Die Erfindung ist nicht auf die angegebene Kombination der Merkmale des Hauptanspruchs oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung bevorzugter Ausführungsformen der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Vorteilhafte Ausführungsformen der Erfindung, die nachfolgend erläutert werden, sind in den Zeichnungen dargestellt. Es zeigt:
- Fig. 1: eine schematische Darstellung eines Elektrofahrzeugs entsprechend einer bevorzugten Ausführungsform der Erfindung;
- Fig. 2: eine Seitenansicht eines Antriebsstranges des Elektrofahrzeugs aus Fig. 1;
- Fig. 3: eine schematische Darstellung eines Verteilergetriebes des Antriebsstranges aus Fig. 2, entsprechend einer bevorzugten Ausgestaltungsmöglichkeit der Erfindung; und
- Fig. 4 bis 6: schematische Ansichten möglicher Ausgestaltungen einer Verteilereinrichtung der Antriebseinheit aus Fig. 3.

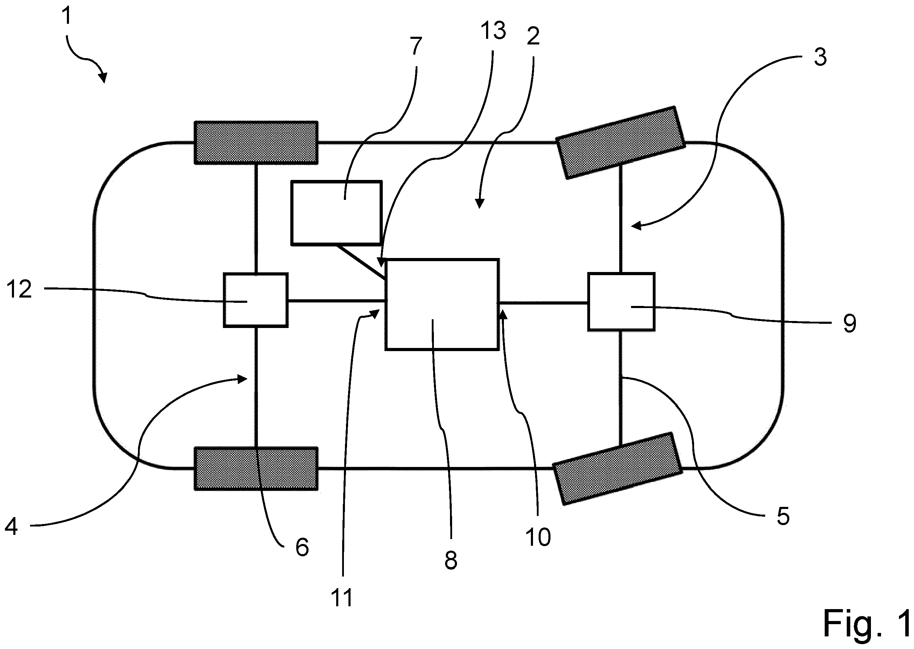

Fig. 1 zeigt eine schematische Ansicht eines Kraftfahrzeugs 1, bei welchem es sich insbesondere um ein Nutzfahrzeug in Form eines geländegängigen LKWs handelt. Das Kraftfahrzeug 1 weist dabei einen Antriebsstrang 2 auf, welcher mit zwei Antriebsachsen 3 und 4 ausgestattet ist. Dabei handelt es sich bei der Antriebsachse 3 um eine lenkbare Vorderachse 5 und bei der Antriebsachse 4 um eine nicht lenkbare Hinterachse 6. Insofern ist das Kraftfahrzeug 1 mit einem permanenten oder zuschaltbaren Allradantrieb ausgestattet.

Innerhalb des Antriebsstranges 2 können die beiden Antriebsachsen 3 und 4 über eine Antriebseinheit 7 angetrieben werden, welche in Längsrichtung des Elektrofahrzeugs 1 zwischen den Antriebsachsen 3 und 4 platziert ist. Dabei setzt sich diese Antriebseinheit 7 - vorliegend nicht weiter im Detail dargestellt - aus mindestens einer Elektromaschine und bevorzugt einem nachgeschalteten Mehrganggetriebe zusammen, so dass das Kraftfahrzeug 1 als Elektrofahrzeug ausgeführt ist. Abtriebsseitig ist die Antriebseinheit 7 mit einem Verteilergetriebe 8 verbunden, über welches eine Antriebsleistung der Antriebseinheit 7 auf die beiden Antriebsachsen 2 und 3 verteilt wird oder verteilt werden kann.

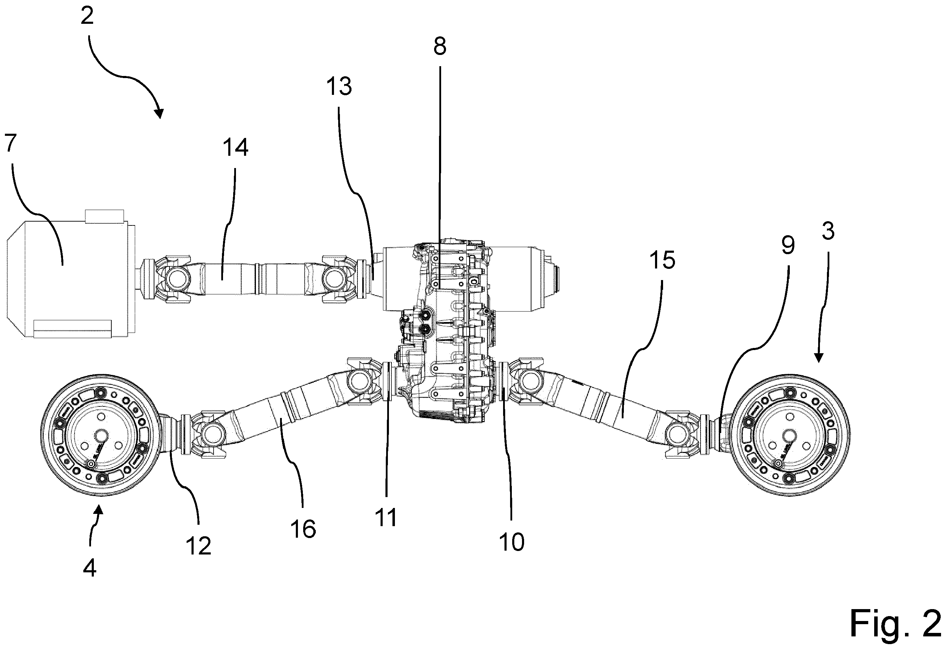

Konkret ist dabei ein Achsdifferential 9 der Antriebsachse 3 an einem Getriebeausgang 10 des Verteilergetriebes 8 angebunden, wobei das Verteilergetriebe 8 zudem an einem Getriebeausgang 11 mit einem Achsdifferential 12 der Antriebsachse 4 sowie an einem Getriebeeingang 13 mit der Antriebseinheit 7 in Verbindung steht. Wie in der Seitenansicht des Antriebsstranges 2 in Fig. 2 zu erkennen ist, sind die Verbindungen zwischen der Antriebseinheit 7 und dem Getriebeeingang 12, zwischen dem Getriebeausgang 10 und dem Achsdifferential 9 sowie zwischen dem Getriebeausgang 11 und dem Achsdifferential 12 über je eine zwischenliegende Gelenkwelle 14 bzw. 15 bzw. 16 hergestellt.

In Fig. 1 ist die Antriebseinheit 7 gegenüber dem Verteilergetriebe 8 in Querrichtung des Kraftfahrzeuges 1 versetzt dargestellt, wobei diese Darstellung in Fig. 1 aus Gründen der Darstellbarkeit vorgenommen worden ist. Bevorzugt ist die Antriebseinheit 7 in Querrichtung jedoch überdeckend mit dem Achsdifferential 12 angeordnet, so dass auch die Gelenkwellen 14 und 16 im Wesentlichen in einer Ebene liegen. Gleichwohl kann die Antriebseinheit 7 in Querrichtung versetzt zu Verteilergetriebe 8 und Achsdifferential 12 platziert sein.

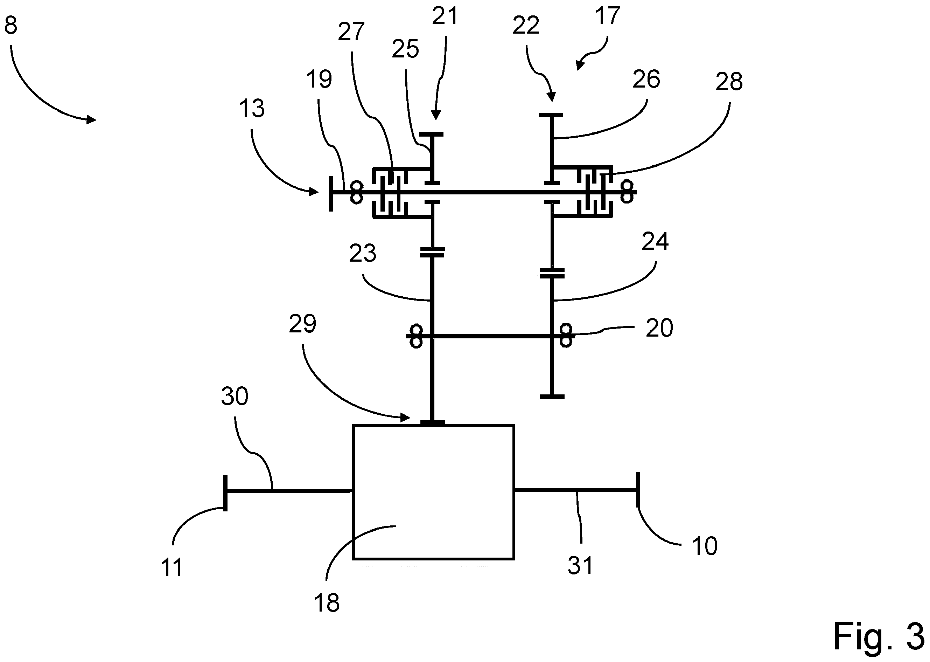

Aus Fig. 3 geht eine schematische Einzelansicht des Verteilergetriebes 8 hervor, welches entsprechend einer bevorzugten Ausführungsform der Erfindung ausgebildet ist. Dabei umfasst das Verteilergetriebe 8 eine Übersetzungseinrichtung 17 und eine Verteilereinrichtung 18, welche gemeinsam in einem - in Fig. 3 nicht weiter dargestellten - Gehäuse des Verteilergetriebes 8 aufgenommen sind. Die Übersetzungseinrichtung 17 weist dabei eine Eingangswelle 19 auf, die an einem Wellenende den Getriebeeingang 12 des Verteilergetriebes 8 bildet. Achsparallel zu der Eingangswelle 19 ist zudem eine Welle 20 vorgesehen, wobei die Eingangswelle 19 und die Welle 20 über zwei Stirnradstufen 21 und 22 jeweils miteinander koppelbar sind.

Beide Stirnradstufen 21 und 22 weisen dabei jeweils je ein Festrad 23 bzw. 24 und je ein Losrad 25 bzw. 26 auf, wobei das jeweilige Losrad 25 bzw. 26 permanent mit den zugehörigen Festrad 23 bzw. 24 im Zahneingriff steht. Während die Festräder 23 und 24 jeweils drehfest auf der Welle 20 angeordnet sind, sind die Losräder 25 und 26 jeweils drehbar auf der Eingangswelle 19 platziert.

Die Eingangswelle 19 kann dabei mit der Welle 20 über die Stirnradstufe 21 unter Darstellung eines ersten Übersetzungsverhältnisses gekoppelt werden, indem das Losrad 25 durch Betätigen eines Schaltelements 27 an der Eingangswelle 19 festgesetzt wird. Alternativ dazu kann eine Koppelung der Eingangswelle 19 und der Welle 20 auch mit einem zweiten Übersetzungsverhältnis dargestellt werden, wozu ein Schaltelement 28 in einen betätigten Zustand zu überführen ist, welches daraufhin das Losrad 26 an der Eingangswelle 19 festsetzt.

Bevorzugt handelt es sich dabei bei dem über die Stirnradstufe 21 darstellbaren Übersetzungsverhältnisses um einen Geländegang, während bei Kraftflussführung über die Stirnradstufe 22 ein Straßengang geschaltet wird. Als Besonderheit sind die Schaltelemente 27 und 28 jeweils als lastschaltbare Schaltelemente ausgebildet, wobei beide Schaltelemente 27 und 28 vorliegend als kraftschlüssige Schaltelemente in Form von Lamellenschaltelementen ausgeführt sind.

Das Festrad 23 der Stirnradstufe 21 bildet vorliegend eine Ausgangsseite 29 der Übersetzungseinrichtung 17 aus, an welcher die Übersetzungseinrichtung 17 permanent mit einer Eingangsseite der nachfolgenden Verteilereinrichtung 18 gekoppelt ist. Über diese Ausgangsseite 29 erfolgt dabei eine Weiterleitung einer Antriebsbewegung bei Kraftflussführung über eine der beiden Stirnradstufen 21 oder 22. Über die Verteilereinrichtung 18 wird dann bzw. kann dann eine Verteilung diese Antriebsbewegung auf zwei Abtriebswellen 30 und 31 vorgenommen werden, an deren Wellenenden jeweils je einer der Getriebeausgänge 10 und 11 ausgestaltet ist.

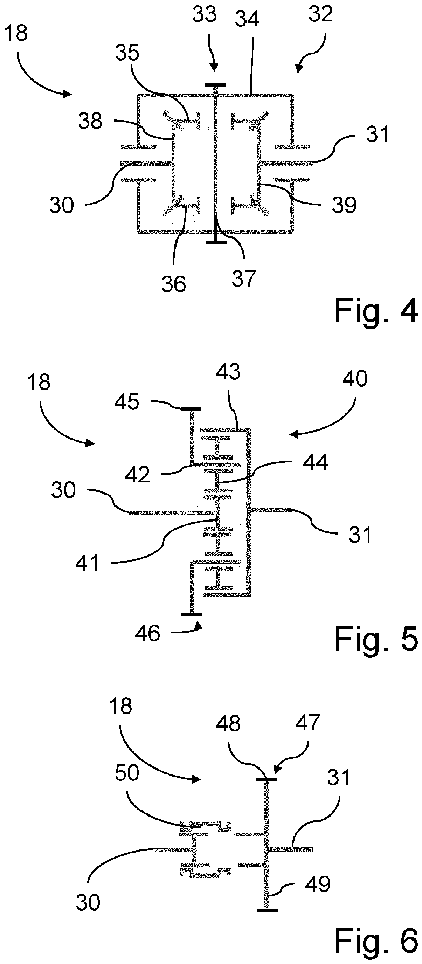

Die Fig. 4 bis 6 zeigen mögliche Ausgestaltungen der Verteilereinrichtung 18, wie sie jeweils bei dem Verteilergetriebe 8 aus Fig. 3 verwirklicht sein können. Dabei zeigt Fig. 4 eine Ausführung der Verteilereinrichtung 18, bei welcher die Verteilereinrichtung 18 ein Kegelraddifferential 32 aufweist, über welches eine an einer Eingangsseite 33 der Verteilereinrichtung 18 eingeleitete Antriebsleistung auf die Abtriebswelle 30 und 31 und damit auf die hieran angebundenen Antriebsachsen 3 und 4 im Sinne einer Längsverteilung verteilt wird. Dabei ist die Eingangsseite 33 vorliegend als Verzahnung eines Differentialkorbes 34 ausgebildet, wobei an der Verzahnung des Differentialkorbes 34 dabei ein permanenter Zahneingriff mit der Ausgangsseite 29 der Übersetzungseinrichtung 17 in Form des Festrades 23 hergestellt ist.

In dem Differentialkorb 34 sind zwei Ausgleichskegelräder 35 und 36 auf einem Bolzen 37 drehbar gelagert, wobei die Ausgleichskegelräder 35 und 36 jeweils mit Abtriebskegelrädern 38 und 39 kämmen, die jeweils drehfest auf je einer der Abtriebswelle 30 und 31 platziert sind. Über das Kegelraddifferential 32 wird dabei eine gleichmäßige Momentenaufteilung auf die beiden Getriebeausgänge 10 und 11 unter möglichem Ausgleich von Drehzahldifferenzen vorgenommen.

Hingegen zeigt Fig. 5 eine Variante der Verteilereinrichtung 18, bei welcher die Verteilereinrichtung 18 ein Planetendifferential 40 aufweist. Das Planetendifferential 40 setzt sich aus einem Sonnenrad 41, einem Planetensteg 42 und einem Hohlrad 43 zusammen, wobei in dem Planetensteg 42 mehrere Planetenräder 44 drehbar gelagert sind, die jeweils sowohl mit dem Sonnenrad 41, als auch dem Hohlrad 43 im Zahneingriff stehen.

Der Planetensteg 42 ist dabei an einer Verzahnung 45 permanent mit der Ausgangsseite 29 der Übersetzungseinrichtung 17 in Fig. 3 gekoppelt, indem an der Verzahnung 45 ein Zahneingriff mit der Verzahnung des Festrades 23 hergestellt ist. Insofern bildet die Verzahnung 45 eine Eingangsseite 46 der Verteilereinrichtung 18. Während das Sonnenrad 41 drehfest mit der Abtriebswelle 30 verbunden ist, steht das Hohlrad 43 drehfest mit der Abtriebswelle 31 in Verbindung. Auch bei dem Planetendifferential 40 findet dabei eine Momentenaufteilung auf die Getriebeausgänge 10 und 11 unter möglichem Ausgleich von Drehzahldifferenzen statt, wobei im Unterschied zu dem Kegelraddifferential 32 hierbei aber eine ungleichmäßige Momentenaufteilung möglich ist.

Bei der in Fig. 6 gezeigten Ausgestaltungsmöglichkeit der Verteilereinrichtung 18 ist die Abtriebswelle 31 permanent mit einer Eingangsseite 47 der Verteilereinrichtung 18 verbunden, wobei Eingangsseite 47 dabei durch eine Verzahnung 48 eines drehfest auf der Abtriebswelle 31 platzierten Stirnrades 49 gebildet ist. Dabei steht das Stirnrad 49 an der Verzahnung 48 permanent mit der Verzahnung des Festrades 23 der Übersetzungseinrichtung 17 im Zahneingriff.

Die Abtriebswelle 30 kann über eine zwischenliegende Kupplung 50 drehfest mit der Abtriebswelle 31 und damit auch der Eingangsseite 47 verbunden werden, wodurch eine an der Eingangsseite 47 eingeleitete Antriebsleistung gleichmäßig auf die beiden Abtriebswellen 30 und 31 verteilt wird. Ein Ausgleich von Drehzahldifferenzen findet hierbei nicht statt. Im Unterschied zu den beiden vorhergehenden Variante nach Fig. 4 oder 5 ist bei der Ausführung der Verteilereinrichtung 18 gemäß Fig. 6 zudem kein permanenter Allradantrieb realisiert, da in einem geöffneten Zustand der Kupplung 50 kein Kraftfluss auf die Abtriebswelle 30 und damit zu dem Getriebeausgang 11 stattfindet. Im Falle der Ausführung nach Fig. 6 ist der Allradantrieb durch Betätigung der Kupplung 50 zuschaltbar.

Mittels der erfindungsgemäßen Ausgestaltung kann ein Verteilergetriebe verwirklicht werden, bei welchem durch Lastschaltbarkeit von Übersetzungsverhältnissen ein hoher Komfort gegeben ist.

### Bezugszeichen

- 1: Kraftfahrzeug
- 2: Kraftfahrzeugantriebsstrang
- 3: Antriebsachse
- 4: Antriebsachse
- 5: Vorderachse
- 6: Hinterachse
- 7: Antriebseinheit
- 8: Verteilergetriebe
- 9: Achsdifferential
- 10: Getriebeausgang
- 11: Getriebeausgang
- 12: Achsdifferential
- 13: Getriebeeingang
- 14: Gelenkwelle
- 15: Gelenkwelle
- 16: Gelenkwelle
- 17: Übersetzungseinrichtung
- 18: Verteilereinrichtung
- 19: Eingangswelle
- 20: Welle
- 21: Stirnradstufe
- 22: Stirnradstufe
- 23: Festrad
- 24: Festrad
- 25: Losrad
- 26: Losrad
- 27: Schaltelement
- 28: Schaltelement
- 29: Ausgangsseite
- 30: Abtriebswelle
- 31: Abtriebswelle
- 32: Kegelraddifferential
- 33: Eingangsseite
- 34: Differentialkorb
- 35: Ausgleichskegelrad
- 36: Ausgleichskegelrad
- 37: Bolzen
- 38: Abtriebskegelrad
- 39: Abtriebskegelrad
- 40: Planetendifferential
- 41: Sonnenrad
- 42: Planetensteg
- 43: Hohlrad
- 44: Planetenräder
- 45: Verzahnung
- 46: Eingangsseite
- 47: Eingangsseite
- 48: Verzahnung
- 49: Stirnrad
- 50: Kupplung

## Patentansprüche

1. Verteilergetriebe (8) für einen Kraftfahrzeugantriebsstrang (2), umfassend eine Verteilereinrichtung (18) und eine Übersetzungseinrichtung (17), welche ein erstes Schaltelement (27) und ein zweites Schaltelement (28) aufweist, wobei über die Übersetzungseinrichtung ein Kraftfluss von einem Getriebeeingang (13) des Verteilergetriebes (8) durch Betätigung des ersten Schaltelements (27) mit einem ersten Übersetzungsverhältnis sowie mittels Betätigung des zweiten Schaltelements (28) mit einem zweiten Übersetzungsverhältnis jeweils der Verteilereinrichtung (18) eingangsseitig zuführbar ist, und wobei die Verteilereinrichtung (18) abtriebsseitig mit mehreren Getriebeausgängen (10, 11) in Verbindung steht, die im Kraftfahrzeugantriebsstrang (2) jeweils für die Verbindung mit je einer Antriebsachse (3, 4) vorgesehen sind, **dadurch gekennzeichnet, dass** das erste Schaltelement (27) und das zweite Schaltelement (28) als lastschaltbare Schaltelemente ausgeführt sind.

2. Verteilergetriebe (8) nach Anspruch 1, **dadurch gekennzeichnet, dass** das erste (27) Schaltelement und/oder das zweite Schaltelement (28) als kraftschlüssiges Schaltelement, insbesondere als Lamellenschaltelement ausgebildet ist.

3. Verteilergetriebe (8) nach Anspruch 1 oder 2, **dadurch gekennzeichnet, dass** die Übersetzungseinrichtung (17) eine Eingangswelle (19) aufweist, die drehfest mit dem Getriebeeingang (13) verbunden ist, wobei die Eingangswelle (19) der Übersetzungseinrichtung (17) durch Betätigung des ersten Schaltelements (27) sowie durch Schließen des zweiten Schaltelements (28) jeweils mit einer Ausgangsseite (29) der Übersetzungseinrichtung (17) koppelbar ist, die permanent mit einer Eingangsseite (33; 46; 47) der Verteilereinrichtung (18) in Verbindung steht.

4. Verteilergetriebe (8) nach Anspruch 3, **dadurch gekennzeichnet, dass** die Übersetzungseinrichtung (17) eine erste Stirnradstufe (21) und eine zweite Stirnradstufe (22) aufweist, die jeweils zwischen der Eingangswelle (19) und einer achsparallel zu der Eingangswelle (19) angeordneten Welle (20) vorgesehen sind, wobei sich die Stirnradstufen (21, 22) jeweils aus je einem Festrad (23, 24) und je einem Losrad (25, 26) zusammensetzen, welches mit dem je einen Festrad (23, 24) jeweils im Zahneingriff steht, und wobei das erste Schaltelement (27) bei Betätigung das Losrad (25) der ersten Stirnradstufe (21) und das zweite Schaltelement (28) bei Betätigung das Losrad (26) der zweiten Stirnradstufe (22) festsetzt.

5. Verteilergetriebe (8) nach den Ansprüchen 3 und 4, **dadurch gekennzeichnet, dass** bei einer der Stirnradstufen (21, 22) das Losrad (25) drehbar auf der Eingangswelle (19) und das zugehörige Festrad (23) drehfest auf der Welle (20) platziert ist, wobei das Festrad (23) dieser Stirnradstufe (21) die Ausgangsseite (29) der Übersetzungseinrichtung (17) bildet, indem das Festrad (23) permanent mit der Eingangsseite (33; 46; 47) der Verteilereinrichtung (18) in Verbindung steht.

6. Verteilergetriebe (8) nach einem der vorhergehenden Ansprüche, **dadurch gekennzeichnet, dass** die Verteilereinrichtung (18) ein Differentialgetriebe, insbesondere ein Kegelraddifferential (32) oder ein Planetendifferential (40), umfasst, wobei über das Differentialgetriebe ein Antriebsmoment auf Abtriebswellen (30, 31) aufteilbar ist, die jeweils mit je einem der Getriebeausgänge (10, 11) in Verbindung stehen.

7. Verteilergetriebe (8) nach einem der Ansprüche 1 bis 5, **dadurch gekennzeichnet, dass** eine Eingangsseite (47) der Verteilereinrichtung (18) permanent mit einem ersten Getriebeausgang (10) gekoppelt ist, wohingegen ein zweiter Getriebeausgang (11) über eine Kupplung (50) mit dem ersten Getriebeausgang (10) verbindbar ist.

8. Verteilergetriebe (8) nach einem der vorhergehenden Ansprüche, **dadurch gekennzeichnet, dass** die Übersetzungseinrichtung (17) und die Verteilereinrichtung (18) axial überdeckend angeordnet sind.

9. Kraftfahrzeugantriebsstrang (2), insbesondere für ein Nutzfahrzeug, umfassend ein Verteilergetriebe (8) nach einem oder mehreren der Ansprüche 1 bis 8.

10. Kraftfahrzeugantriebsstrang (2) nach Anspruch 9, **dadurch gekennzeichnet, dass** das Verteilergetriebe (8) an seinem Getriebeeingang (13) mit mindestens einer vorgeschalteten Antriebsmaschine, bevorzugt einer Elektromaschine oder einer Verbrennungskraftmaschine, gekoppelt oder koppelbar ist.

11. Kraftfahrzeugantriebsstrang (2) nach Anspruch 9 oder 10, **dadurch gekennzeichnet, dass** mit einem Getriebeausgang (10) des Verteilergetriebes (8) mindestens eine antreibbare Vorderachse (5) und mit einem anderen Getriebeausgang (11) des Verteilergetriebes (8) mindestens eine antreibbare Hinterachse (6) trieblich verbunden ist.

12. Kraftfahrzeug (1), insbesondere Nutzfahrzeug, umfassend einen Kraftfahrzeugantriebsstrang (2) nach einem oder mehreren der Ansprüche 9 bis 11.
